# FASCICULE DE BREVET EUROPEEN

(11) **EP 3 003 749 B1**
(45) Date de publication et mention de la délivrance du brevet: **19.02.2020**
(21) Numéro de dépôt: 14731721.8
(22) Date de dépôt: 26.05.2014
(51) Int. Cl.: B60H 1/00

(54) **JONCTION AÉRAULIQUE ENTRE DEUX MODULES COMPORTANT DES CONDUITS D'AIR**
LUFTTECHNISCHE VERBINDUNG ZWISCHEN ZWEI MODULEN MIT LUFTKANÄLEN
AERAULIC CONNECTION BETWEEN TWO MODULES COMPRISING AIR DUCTS

(30) Priorité: 05.06.2013 FR 1355160
(43) Date de publication de la demande: 13.04.2016
(73) Titulaire: PSA Automobiles SA, 78300 Poissy (FR)
(72) Inventeur: SCHIRMER, Vincent, F-90160 Perouse (FR)
(86) Numéro de dépôt international: PCT/FR2014/051224
(87) Numéro de publication internationale: WO 2014/195603

(56) Documents cités:
- DE-U1-202008 005 603
- FR-A1- 2 886 218
- JP-A- H0 295 920
- JP-A- 2004 034 832
- KR-A- 20100 005 918

## Description

La présente invention concerne un système de jonction pour relier, l'un à l'autre, deux modules d'un véhicule automobile comportant chacun au moins un conduit d'air, ainsi qu'un procédé pour réaliser une telle jonction.

Lors du montage, notamment par robot, du module planche de bord d'un véhicule automobile, il faut disposer d'un espace de manœuvre pour pouvoir mettre le module correctement en place sans arracher d'autres équipements.

En effet, un module planche de bord comprend généralement plusieurs conduits de distribution d'air. Chacun de ces conduits d'air doit être raccordé à un conduit d'air correspondant d'un module comprenant un circuit de distribution d'air préassemblé sur ou dans le plancher du véhicule. La réalisation de cette jonction aéraulique est problématique dans la mesure où il faut effectuer la mise en place du module planche de bord et le raccordement de ses conduits d'air de manière à ne pas arracher les conduits d'air, préalablement posés, du module circuit de distribution d'air dans le plancher, ni à bloquer le montage. A cet effet, la hauteur minimale de l'espace de manœuvre entre les deux modules est de 15 mm. De plus, il faut réaliser la jonction de manière étanche pour garantir les prestations aérauliques et acoustiques demandées.

Une telle jonction aéraulique peut être réalisée par introduction du module planche de bord à l'intérieur de la caisse du véhicule et en le tenant au-dessus du module circuit de distribution d'air de façon à n'avoir qu'à descendre le module planche de bord pour faire emboîter les conduits d'air les uns dans les autres. Une autre possibilité consiste à installer les deux modules en leurs positions définitives avec un espace entre les deux modules et d'insérer dans cet espace un élément intercalaire de jonction.

Dans les deux cas, le montage est effectué au moins partiellement en aveugle et avec un passage des mains de l'opérateur entre les conduits à relier entre eux.

De plus, les conditions précitées rendent pour le moins difficile, sinon même impossible d'effectuer le montage de manière entièrement robotisée.

On connaît, par ailleurs, du document FR2947799, un dispositif de raccordement conformé pour être interposé entre les deux modules et comportant un élément de raccordement mécanique et un élément de verrouillage.

L'utilisation d'un dispositif de raccordement comportant un élément de raccordement mécanique et un élément de verrouillage permet de former les différentes pièces intervenant de façon à ce qu'elles se guident réciproquement vers la position qu'elles doivent occuper à la fin de l'assemblage pour assurer les prestations aérauliques et acoustiques demandées.

Le système proposé par ce document évite un montage en aveugle et se prête bien à un assemblage robotisé.

Cependant un tel dispositif nécessite un contrôle et un respect de la chaîne de côtes, trop rigoureux, pour gérer les positions relatives des conduits d'air par rapport à l'élément de raccordement et, en conséquence, le positionnement au moment du montage reste aléatoire.

On connait également, notamment du document KR20100005918A, un système conforme au préambule de la revendication 1.

Dans ce système, le dispositif de raccordement est d'abord positionné sur le premier module puis, dans un second temps, le deuxième module est inséré dans le dispositif de raccordement.

Selon l'invention, on utilise un système de jonction aéraulique comportant un dispositif de raccordement mécanique et l'on effectue l'assemblage des deux modules moyennant le dispositif de raccordement de manière simple, étanche et fiable, et sans élément de verrouillage.

A cet effet, la présente invention a pour premier objet un système de jonction aéraulique conforme à la partie caractérisante de la revendication 1.

Selon une caractéristique, le système comporte un joint d'épaisseur déterminée, déposé entre la rampe de guidage du deuxième module et celle du dispositif de raccordement pour assurer l'étanchéité et le rattrape des défauts d'alignement entre les premier et deuxième modules selon une direction orthogonale à la direction d'insertion du dispositif de raccordement.

Selon une autre caractéristique, l'extrémité libre du conduit du deuxième module est conformée pour définir la rampe de guidage du deuxième module.

Selon une autre caractéristique, l'extrémité libre du conduit du deuxième module comporte une collerette entourant l'embouchure du conduit et le joint est déposé sur ladite collerette.

Selon une autre caractéristique, le dispositif de raccordement comporte en outre des moyens de guidage aptes à coopérer avec des moyens de guidage et de maintien complémentaires du premier module, à l'interface entre le premier module et le dispositif de raccordement, pour amener le dispositif de raccordement depuis une première position d'insertion, entre le premier module et l'extrémité libre du conduit du deuxième module, jusqu'à une deuxième position de verrouillage du dispositif de raccordement sur le premier module entre le conduit du premier module et l'extrémité libre du conduit du deuxième module.

Selon une autre caractéristique, le système comporte un dispositif de verrouillage par clippage de premiers moyens de verrouillage sur des deuxièmes moyens de verrouillage, en regard les uns des autres, et disposés respectivement sur le dispositif de raccordement et sur le premier module, ou inversement, quand le dispositif de raccordement est dans la deuxième position.

L'invention a pour deuxième objet, un dispositif de raccordement destiné à être mis en œuvre dans le système décrit ci-dessus, caractérisé en ce qu'il définit un tiroir comportant au moins des premières parties aptes à s'emboîter avec des deuxièmes parties du premier module pour construire un conduit de liaison apte à assurer une liaison aéraulique entre le conduit du premier module et le conduit du deuxième module, et des premiers moyens de guidage formant glissières ou rails, disposés dans la partie supérieure du tiroir, aptes à coopérer avec les moyens de guidage et de maintien, complémentaires de ceux du tiroir et un fond comportant une rampe de guidage définissant un deuxième moyen de guidage.

L'invention a pour troisième objet, un procédé de jonction aéraulique pour relier, l'un à l'autre, deux modules d'un véhicule automobile, pré-positionnés en regard l'un de l'autre et comportant chacun au moins un conduit d'air, et un dispositif de raccordement tel que décrit ci-dessus, caractérisé en ce qu'il consiste :
- à centrer puis introduire les moyens de guidage du dispositif de raccordement sur les moyens de guidage complémentaires et de maintien du premier module de manière à accrocher le dispositif de raccordement sur le premier module tout en engageant le dispositif de raccordement sur le deuxième module pour faire coïncider la rampe de guidage du dispositif de raccordement avec la rampe de guidage du conduit du deuxième module;
- à pousser le dispositif de raccordement une fois engagé entre les premier et deuxième modules jusqu'à sa mise en butée sur une butée du premier module ; la poussé écrasant le joint disposé sur la rampe de guidage du conduit du deuxième module assurant à la fois l'étanchéité de la jonction et le rattrapage des défauts d'alignement des premier et deuxième module ; et
- à verrouiller le dispositif de raccordement dans le premier module une fois que le dispositif de raccordement a atteint la butée ; le conduit de liaison du dispositif de raccordement étant construit quand le dispositif de raccordement est en butée.

Enfin, l'invention a pour quatrième objet, un véhicule comportant au moins un dispositif de raccordement tel que décrit ci-dessus, dans lequel le premier module est un groupe de climatisation supporté par la planche de bord du véhicule et le deuxième module est un circuit de distribution d'air préassemblé dans ou sur le plancher du véhicule.

D'autres caractéristiques et avantages de la présente invention ressortiront de la description ci-après d'un mode de réalisation du système de l'invention et de la mise en œuvre du procédé de l'invention. Cette description est faite en référence aux dessins dans lesquels :
- la figure 1 représente, suivant une vue en perspective, un système de jonction aéraulique selon l'invention, entre un groupe de climatisation et un circuit de distribution d'air d'un véhicule ;
- la figure 2 représente le même système suivant une vue en coupe transversale ;
- la figure 3 représente une vue schématique de face du système selon l'invention mettant en évidence les plans de guidage ;
- la figure 4 représente, suivant une vue en perspective, un dispositif de raccordement mis en œuvre par le système selon l'invention ;
- la figure 5 représente, suivant une vue en perspective, l'extrémité libre d'une partie d'un conduit d'air du circuit de distribution d'air, à raccorder par le système selon l'invention ; et
- les figures 6 et 7 représentent les principales étapes du procédé de montage du dispositif de raccordement du système selon l'invention.

Dans l'ensemble de la présente description et les revendications, des indications de position et d'orientation telles que « supérieur, inférieur, horizontalement, verticalement, gauche, droit » se réfèrent aux positions et orientations représentées dans les dessins. De telles indications sont donc, le cas échéant, à adapter au cas réel lors de la mise en œuvre de l'invention.

Sur les figures, les différentes vues sont orientées dans un même référentiel orthonormé X Y Z et on désignera par axes X, Y et Z les directions parallèles à ces axes.

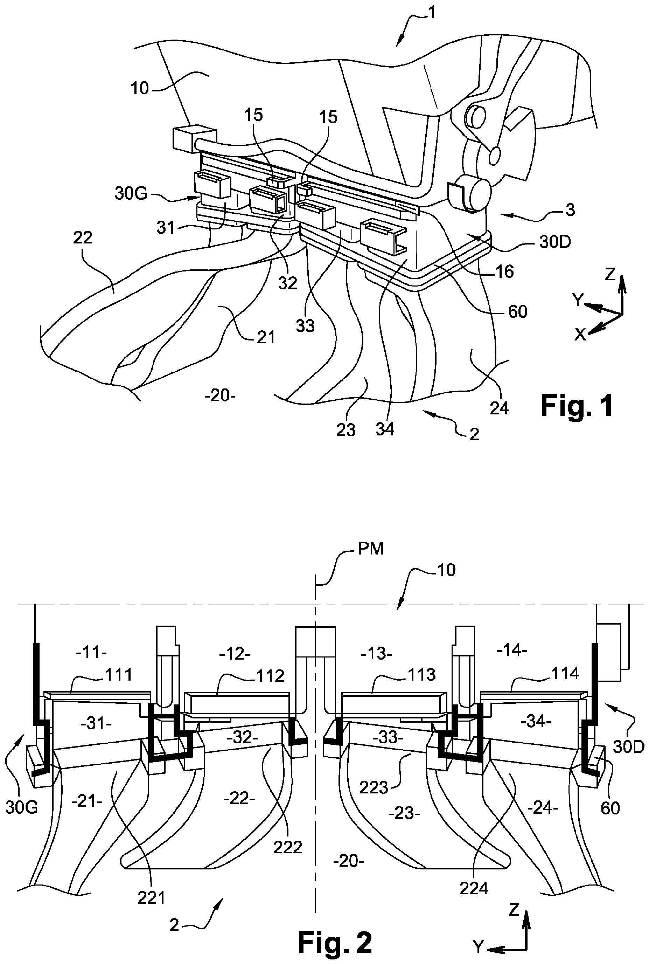

Les figures 1 et 2 représentent, respectivement en vue en perspective et suivant une vue en coupe transversale, un système de jonction entre un premier module 1 et un second module 2, comportant un dispositif de raccordement 3, étanche, disposé entre les premier et second modules 1 et 2.

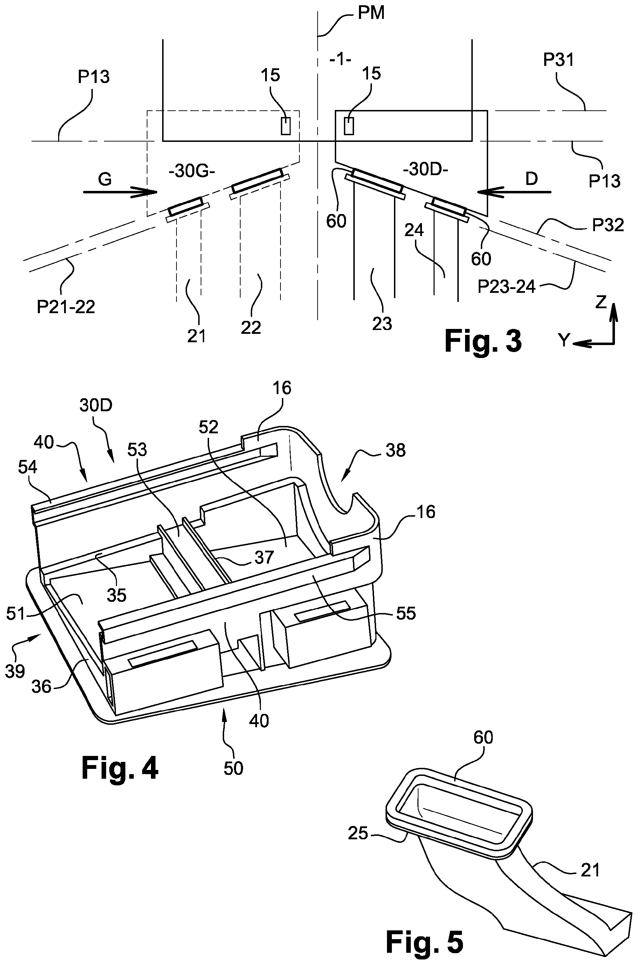

Selon l'exemple décrit en référence aux figures 1 à 7, le premier module 1 comporte un groupe de climatisation 10 également désigné par l'acronyme anglo-saxon HVAC (Heating, Ventilation and Air-Conditioning).

Le groupe de climatisation 10 est ici intégré dans la planche de bord PDB du véhicule V en étant centré sur la planche de bord PDB suivant l'axe Y.

Le groupe de climatisation 10 comprend quatre conduits de sortie d'air 11-14 parallèles entre eux et faisant saillie de la partie inférieure de la planche de bord PDB, en s'étendant suivant l'axe Z. Les conduits de sortie d'air 11-14 sont agencés pour définir deux paires de conduits de sortie 11-12 et 13-14 répartis de manière symétrique par rapport au plan médian du groupe de climatisation 10 qui coïncide sensiblement avec le plan médian PM du véhicule V s'étendant suivant l'axe X.

On désignera par paire gauche, la paire de conduits de sortie 11-12 disposée à gauche de plan médian PM et par paire droite, la paire de conduits de sortie 13-14 disposée à droite du plan médian PM.

Les embouchures 111-114 des deux paires de conduits de sortie 11-12 et 13-14, de section rectangulaire, sont contenues dans un même plan horizontal P13 (FIG. 2).

Le second module 2 est un circuit de distribution d'air 20 comportant un ensemble de quatre conduits d'air 21-24, préassemblés dans ou sur le plancher P du véhicule automobile V.

Les conduits d'air 21-24 sont agencés sur le plancher P pour définir deux paires de conduits d'air 21-22 et 23-24, réparties de manière symétrique par rapport au plan médian PM du groupe de climatisation 10 qui coïncide sensiblement au plan médian PM du véhicule V suivant l'axe X.

On désignera par paire gauche, la paire de conduits d'air 21-22 disposée à gauche de plan médian PM et par paire droite, la paire de conduits d'air 23-24 disposée à droite du plan médian PM.

Les embouchures 221-222 de la paire gauche 21-22, de section rectangulaire, sont contenues dans un même plan P21-22 ; ce plan P21-22 étant incliné d'un angle déterminé θ par rapport au plan P13 contenant les embouchures 111-112 de la paire gauche des conduits de sortie d'air 11-12 du groupe de climatisation 10.

Les embouchures 223-224 de la paire droite 23-24, de section rectangulaire, sont contenues dans un même plan P23-24 ; ce plan étant incliné d'un même angle θ par rapport au plan P13 contenant les embouchures 113-114 de la paire droite des conduits de sortie d'air 13-14 du groupe de climatisation 10.

Les extrémités libres de chaque conduit 21-24 du circuit de distribution d'air 20 se terminent par des collerettes, ou brides, planes 25 entourant les embouchures 221-224.

Les deux paires de conduits de sortie d'air 11-12 et 13-14 du groupe de climatisation 10 et les deux paires de conduits d'air 21-22 et 23-24 du circuit de distribution d'air 20 sont positionnées de manière à ce que les embouchures 111-114 des paires de conduits de sortie d'air 11-12 et 13-14 du groupe de climatisation 10 et celles 221-224 des paires de conduits 21-22 et 23-24 du circuit de distribution d'air 20 soient positionnées pour être en regard de leurs embouchures respectives.

Le dispositif de raccordement 3 comprend deux éléments de raccordement mécanique, identiques, gauche 30G et droit 30D, qui sont chacun pourvu de moyens assurant leur maintien en position par rapport à la partie inférieure du groupe de climatisation 10, respectivement sur les parties inférieures gauche et droite du groupe de climatisation 10.

Chaque élément de raccordement 30G ou 30D définit un tiroir conformé pour définir respectivement avec les extrémités des paires gauche et droite 11-12 et 13-14 de conduits de sortie 11-14 du groupe de climatisation 10, deux conduits de liaison 31-32 ou 33-34, parallèles entre eux quand le tiroir 30G ou 30D est monté dans sa position finale sur le groupe de climatisation 10.

Les conduits de liaison 31-32 ou 33-34 du tiroir 30G ou 30D sont donc construits quand le tiroir 30G ou 30D est en butée et verrouillé.

A cet effet, chaque tiroir 30G ou 30D comporte des épaulements 35, des parois 36 et des cloisons 37 aptes à coopérer avec des épaulements, parois et cloisons complémentaires des extrémités des conduits de sortie d'air 11-14 du groupe de climatisation 10, de manière à construire par emboîtement, lesdits conduits de liaison 31-32 ou 33-34, entre le groupe de climatisation 10 et le circuit de distribution d'air 20.

Ces conduits de liaison 31-32 ou 33-34 s'étendent suivant l'axe Z, perpendiculaire à l'axe Y de montage des tiroirs 30G ou 30D ; lesdits conduits de liaison 31-32 ou 33-34 traversant de part en part les tiroirs 30G ou 30D.

Chaque conduit de liaison 31-34 définit donc un élément tubulaire à section rectangulaire et la section des embouchures supérieures des conduits de liaison 31-34 correspond à la section des embouchures 111-114 des conduits de sortie d'air 11-14 du groupe de climatisation 10.

De même, les sections des embouchures inférieures des conduits de liaison 31-34 correspondent aux sections des embouchures des conduits 21-24 du circuit de distribution d'air 20.

Comme tout tiroir, la partie supérieure du tiroir 30G ou 30D est ouverte. Le tiroir 30G ou 30D est délimité par une face avant 38, une face arrière 39 et deux faces latérales 40. Toutes ces faces 38-40 sont liées entre elles et solidaires d'un fond plat 50 dans lequel sont aménagées deux ouvertures 51 et 52 de section rectangulaire définissant les embouchures inférieures des conduits de liaison 31-32 ou 33-34. Une cloison transversale 53, reliant les deux faces latérales 40 du tiroir 30G ou 30D, sépare les deux ouvertures 51 et 52 et définit une partie des conduits de liaison 31-32 ou 33-34, de même que les faces latérales 40, les faces avant 38 et arrière 39 du tiroir 30G et 30D via des épaulements 35 ménagés dans l'épaisseur desdites faces 38-40.

Le plan P31 de la partie supérieure du tiroir 30G ou 30D forme avec le plan P32 du fond 50 du tiroir 30G ou 30D l'angle déterminé θ.

Le fond 50 du tiroir 30G ou 30D présente donc un plan incliné quand il est monté sur le groupe de climatisation 10.

Les bords supérieurs des faces latérales verticales 40 du tiroir 30G ou 30D supportent une paire de profilés 54, 55 définissant des glissières, ou rails, ménagés sur l'extérieur du tiroir 30G ou 30D, et s'étendent sensiblement sur toute la longueur du tiroir 30G ou 30D.

Les profilés 54, 55 sont aptes à coopérer par glissement avec des profilés, complémentaires ménagés sur la partie inférieure du groupe de climatisation 10.

Les tiroirs gauche et droit 30G et 30D sont introduits respectivement à l'intérieur du véhicule V par le côté gauche, respectivement droit, du véhicule V. Ils sont donc montés suivant deux directions opposées suivant l'axe Y.

Chaque tiroir 30G ou 30D comporte donc deux conduits de liaison 31-32 et 33-34 qui sont destinés à venir s'insérer entre les embouchures 111-112 et 113-114 des conduits de sortie 11-12 et 13-14 du groupe de climatisation 10 et les embouchures 221-222 et 223-224 des conduits 21-24 du circuit de distribution d'air 20 quand les deux tiroirs 30G et 30D sont introduits dans la partie inférieure du groupe de climatisation 10.

Pour que cette liaison, appelée également jonction aéraulique, soit étanche, des joints en mousse thermoplastique 60, bien connus pour leur propriété de déformation sous compression sans fuite d'air, sont déposés sur les brides 25 des conduits 21-24 du circuit de distribution d'air 20. Ils peuvent être déposés sur les brides 25 avant l'assemblage du circuit de distribution d'air 20 sur le plancher P, par collage.

L'étanchéité du système est assurée par l'écrasement de la mousse au moment du montage des tiroirs 30G ou 30D.

Avantageusement, l'agencement d'un plan incliné sur les embouchures 221-224 des conduits 21-24 de distribution d'air 20 permet de réaliser une interface entre le groupe de climatisation 10 et le circuit de distribution d'air 20 selon une seule translation horizontale par un côté latéral du véhicule V et, l'introduction d'un tiroir 30G ou 30D comportant lui-même un fond incliné 50 du même angle, créé un effet de rampe qui transforme la translation latérale du tiroir 30G ou 30D suivant l'axe Y en déplacement vertical du tiroir 30G ou 30D suivant l'axe Z du tiroir 30G ou 30D.

Le joint 60 assure alors non seulement l'étanchéité de l'assemblage mais l'épaisseur du joint 60 est déterminée pour absorber de plus les dispersions de tolérance et de fabrication suivant l'axe Z.

Ainsi une jonction aéraulique étanche est réalisée selon une seule opération de montage aisée, sans nécessiter d'élément de verrouillage entre le groupe de climatisation 10 et le circuit de distribution d'air 20 après montage.

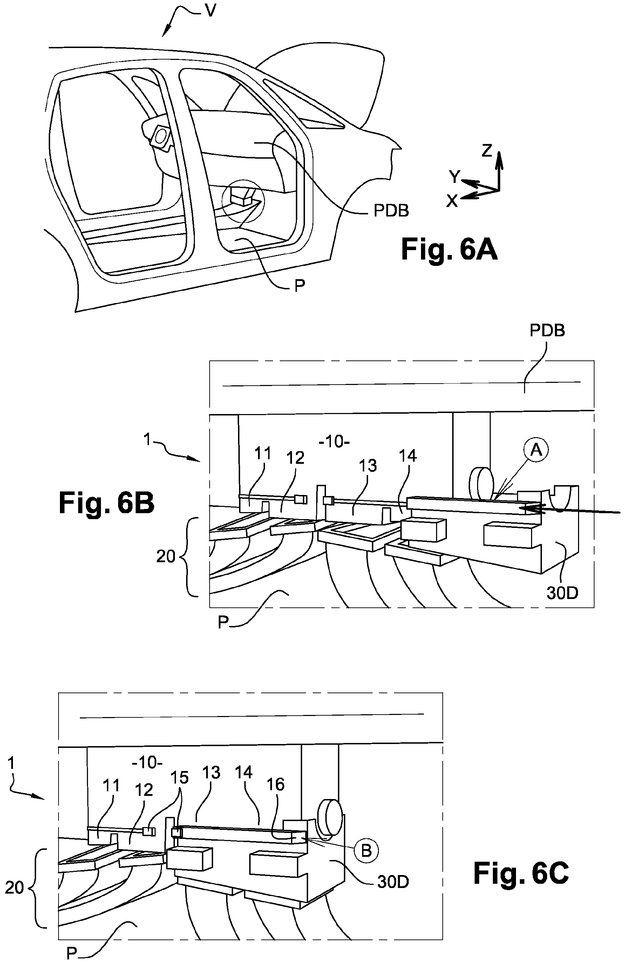

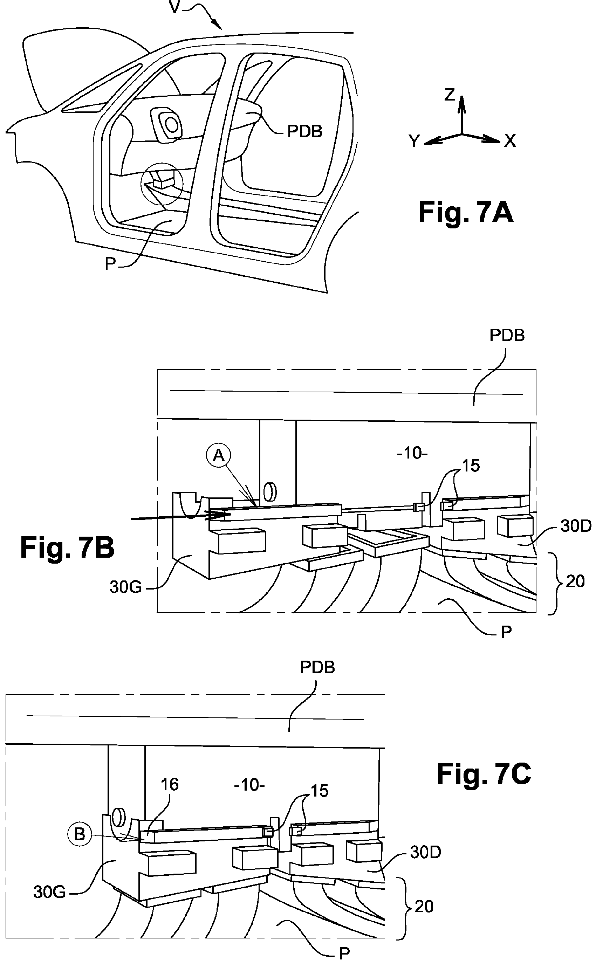

Le procédé de montage est décrit ci-après en référence aux figures 6 et 7.

La figure 6A permet de visualiser la zone de montage du tiroir droit à l'intérieur du véhicule.

Les figures 6B à 6C illustrent les étapes de montage du tiroir gauche 30G au moment de l'insertion du tiroir droit 30D entre le groupe de climatisation 10 et le circuit de distribution d'air 20 et la position finale de verrouillage.

La position A correspond au centrage du tiroir 30D par rapport au flanc latéral droit du groupe de climatisation 10.

L'opération de centrage est symbolisée par un pictogramme explicite de centrage pour l'opérateur.

La position B correspond à la position de verrouillage du tiroir 30D dans sa position finale, en butée, une fois monté et fixé sur le groupe de climatisation 10.

L'opération de verrouillage est symbolisée par un pictogramme explicite de verrouillage pour l'opérateur.

Le procédé de montage se déroule suivant les étapes suivantes.

L'opérateur saisit le tiroir par sa face avant et présente la face arrière du tiroir en regard du flanc droit de la partie inférieure du groupe de climatisation, en centrant le tiroir entre le groupe de climatisation et le circuit de distribution d'air.

Il introduit ensuite le tiroir, sur le flanc droit de la partie inférieure du groupe de climatisation de manière à faire coopérer les glissières ou rails de guidage, disposées sur la partie supérieure du tiroir, avec les glissières ou rails complémentaires de guidage et de maintien du groupe de climatisation de manière à accrocher le tiroir sur le groupe de climatisation.

De manière concomitante, il engage la partie inférieure du tiroir, formant rampe de guidage, sur le premier conduit extérieur droit du circuit de distribution d'air, pour faire coïncider la partie inférieure du tiroir formant rampe de guidage avec la rampe de guidage formée par l'extrémité libre du conduit.

Une fois le tiroir engagé sur le groupe de climatisation et les rampes de guidage en coïncidence, l'opérateur n'a plus qu'à pousser le tiroir suivant une translation horizontale suivant l'axe Y, de la droite vers la gauche, jusqu'à la mise en butée du tiroir sur une butée de fin de course 15 disposée sur le groupe de climatisation.

Le tiroir, guidé en translation et maintenu par sa partie supérieure, sur la partie inférieure du groupe de climatisation, exerce une poussé verticale suivant l'axe Z, au niveau des rampes de guidage (les rampes transformant une translation horizontale en une translation verticale), ce qui a pour effet d'écraser les joints préalablement déposés autour des embouchures de la paire de conduits du circuit de distribution d'air, en écrasant d'abord celui du conduit extérieur puis celui du conduit intérieur.

L'écrasement des joints, assure à la fois l'étanchéité de la jonction et le rattrapage des défauts d'alignement des conduits du groupe de climatisation vis-à-vis des conduits du circuit de distribution.

L'épaisseur des joints est déterminée pour être suffisante pour absorber les tolérances de fabrication et de positionnement tout en garantissant l'étanchéité de la jonction aéraulique.

L'opérateur termine sa poussée quand le tiroir a atteint la butée 15.

La butée 15, en forme de crochet, est aménagée sur la partie inférieure du groupe de climatisation 10 et agencée de manière à coopérer avec l'extrémité libre des profilés 54, 55 du tiroir 30G ou 30D.

Le verrouillage est assuré par un dispositif de verrouillage 16 par « clippage » ou encliquetage.

Le dispositif de verrouillage 16 comporte un premier moyen participant au clippage et qui est destiné à s'encliqueter sur un deuxième moyen du dispositif de verrouillage, complémentaire du premier moyen, et aménagé sur la partie inférieure du groupe de climatisation quand le tiroir 30G ou 30D est dans sa position finale de montage.

Le deuxième moyen de verrouillage, aménagé sur la partie inférieure du groupe de climatisation 10, est agencé à proximité de l'angle extérieur de la partie inférieure du groupe de climatisation 10.

Le premier moyen de verrouillage est agencé à proximité de l'angle extérieur du tiroir 30G ou 30D.

Les premier et deuxième moyens sont en regard l'un de l'autre quand le tiroir 30G ou 30D est dans sa position finale de montage.

A titre de variante, les premier et deuxième moyens du dispositif de verrouillage 16 peuvent être inversés.

Le bruit d'encliquetage indique à l'opérateur que le tiroir 30G ou 30D est correctement monté et donc que l'opération de montage est terminée et s'est bien déroulée.

La figure 7A permet de visualiser la zone de montage du tiroir gauche 30G à l'intérieur du véhicule V.

Les figures 7B à 7C illustrent les étapes de montage du tiroir gauche 30G au moment de l'insertion du tiroir gauche 30G entre le groupe de climatisation 10 et le circuit de distribution d'air 20 et la position finale de verrouillage.

Le déroulement des étapes est identique à celui du montage du tiroir droit 30D. Il y a une symétrie parfaite par rapport au plan médian PM du véhicule V.

Le système selon l'invention permet donc de disposer deux modules à une distance l'un de l'autre (selon l'axe Z) dictée par les besoins d'un montage par robot et de boucher ensuite l'espace entre les deux modules en réalisant la jonction aéraulique avec un dispositif de raccordement en deux parties ayant la forme de deux tiroirs identiques.

En outre, la jonction aéraulique peut être réalisée par un robot et notamment sans montage en aveugle ni passage de mains d'un opérateur entre les modules.

L'opération de montage implique uniquement des translations horizontales suivant l'axe Y de la gauche vers la droite pour l'élément 30G et de la droite vers la gauche pour l'élément 30D

Il en résulte des gains en temps de montage et en moyens de montage, notamment du fait que chacun des modules 1, 2 et des éléments 30G et 30D comporte, venant de matière, tous les moyens utiles pour le montage.

Aucun outillage particulier n'est nécessaire.

## Revendications

1. Système de jonction aéraulique pour relier, l'un à l'autre, des premier et deuxième modules (1, 2) d'un véhicule automobile (V), pré-positionnés en regard l'un de l'autre et comportant chacun au moins un conduit d'air (11, 21) destiné à être en communication aéraulique et au moins un dispositif de raccordement (30G) conformé pour être interposé entre les deux conduits (11, 21), ledit deuxième module (2) comportant une rampe de guidage ayant une inclinaison déterminée par rapport au premier module (1), et ledit dispositif de raccordement (30G) comportant une rampe de guidage (50) dont l'inclinaison correspond à celle du deuxième module (2) en regard dudit dispositif de raccordement(30G), **caractérisé en ce que** le dispositif de raccordement est apte à être inséré entre le premier et le deuxième module pour assurer la jonction aéraulique ; ladite rampe (50) s'étendant suivant la direction d'insertion du dispositif de raccordement (30G) entre les premier et deuxième modules (1 et 2).

2. Système selon la revendication précédente, **caractérisé en ce qu'**il comporte un joint (60) d'épaisseur déterminée, déposé entre la rampe de guidage du deuxième module (2) et celle (50) du dispositif de raccordement (30G) pour assurer l'étanchéité et le rattrape des défauts d'alignement entre les premier et deuxième modules (1 et 2) selon une direction orthogonale à la direction d'insertion du dispositif de raccordement (30G).

3. Système selon la revendication précédente, **caractérisé en ce que** l'extrémité libre du conduit (21) du deuxième module (2) est conformée pour définir la rampe de guidage du deuxième module(2).

4. Système selon la revendication précédente, **caractérisé en ce que** l'extrémité libre du conduit (21) du deuxième module (2) comporte une collerette (25) entourant l'embouchure (221) du conduit (21) et **en ce que** le joint (60) est déposé sur ladite collerette (25).

5. Système selon l'une des revendications précédentes, **caractérisé en ce que** le dispositif de raccordement (30G) comporte en outre des moyens de guidage (54,55) aptes à coopérer avec des moyens de guidage et de maintien complémentaires du premier module (1), à l'interface entre le premier module (1) et le dispositif de raccordement (30G), pour amener le dispositif de raccordement (30G) depuis une première position d'insertion (A), entre le premier module (1) et l'extrémité libre du conduit (21) du deuxième module (2), jusqu'à une deuxième position (B) de verrouillage du dispositif de raccordement(30G) sur le premier module (1) entre le conduit (11) du premier module (1) et l'extrémité libre du conduit (21) du deuxième module (2).

6. Système selon la revendication précédente, **caractérisé en ce qu'**il comporte un dispositif de verrouillage (16) par clippage de premiers moyens de verrouillage sur des deuxièmes moyens de verrouillage, en regard les uns des autres, et disposés respectivement sur le dispositif de raccordement (30G) et sur le premier module (1), ou inversement, quand le dispositif de raccordement (30G) est dans la deuxième position (B).

7. Dispositif de raccordement (3) destiné à être mis en œuvre dans le système selon les revendications précédentes, **caractérisé en ce qu'**il définit un tiroir (30G) comportant au moins des premières parties aptes à s'emboîter avec des deuxièmes parties du premier module (1) pour construire un conduit de liaison (31) apte à assurer une liaison aéraulique entre le conduit (11) du premier module (1) et le conduit (21) du deuxième module (2), et des premiers moyens de guidage formant glissières ou rails (54, 55), disposés dans la partie supérieure du tiroir (30G), aptes à coopérer avec les moyens de guidage et de maintien, complémentaires de ceux du tiroir (30G) et un fond (50) comportant une rampe de guidage définissant un deuxième moyen de guidage.

8. Procédé de jonction aéraulique pour relier, l'un (1) à l'autre (2), deux modules (1, 2) d'un véhicule automobile, pré-positionnés en regard l'un de l'autre et comportant chacun au moins un conduit d'air, et un dispositif de raccordement (30G ; 30D) selon la revendication précédente, **caractérisé en ce qu'**il consiste :
- à centrer puis introduire les moyens de guidage (54, 55) du dispositif de raccordement (30G) sur les moyens de guidage complémentaires et de maintien du premier module (1) de manière à accrocher le dispositif de raccordement (30G) sur le premier module (1) tout en engageant le dispositif de raccordement (30G) sur le deuxième module (2) pour faire coïncider la rampe de guidage (50) du dispositif de raccordement (30G) avec la rampe de guidage du conduit (21) du deuxième module(2);
- à pousser le dispositif de raccordement (30G) une fois engagé entre les premier et deuxième modules (1 et 2) jusqu'à sa mise en butée sur une butée (15) du premier module (1) ; la poussé écrasant le joint (60)disposé sur la rampe de guidage du conduit (21) du deuxième module (2) assurant à la fois l'étanchéité de la jonction et le rattrapage des défauts d'alignement des premier et deuxième module (1 et 2); et
- à verrouiller le dispositif de raccordement (30G) dans le premier module (1) une fois que le dispositif de raccordement (30G) a atteint la butée (15) ; le conduit de liaison (31) du dispositif de raccordement (30G) étant construit quand le dispositif de raccordement (30G) est en butée.

9. Véhicule (V) comportant au moins un dispositif de raccordement (3) selon la revendication 7, dans lequel le premier module (1) est un groupe de climatisation (10) supporté par la planche de bord (PBD) du véhicule (V) et le deuxième module (2) est circuit de distribution d'air (20) préassemblé sur le plancher (P) du véhicule (V).

## Patentansprüche

1. Lufttechnisches Verbindungssystem zum gegenseitigen Verbinden von einem ersten und einem zweiten Modul (1, 2) eines Kraftfahrzeugs (V), die einander gegenüberliegend vorpositioniert sind und jeweils mindestens einen Luftkanal (11, 21), der für die lufttechnische Kommunikation bestimmt ist, und mindestens eine Anschlussvorrichtung (30G) umfassen, die so ausgebildet ist, dass sie zwischen den beiden Kanälen (11, 21) angeordnet werden kann, wobei das zweite Modul (2) eine Führungsschräge mit einer bestimmten Neigung in Bezug auf das erste Modul (1) aufweist und die Anschlussvorrichtung (30G) eine Führungsschräge (50) aufweist, deren Neigung der des zweiten Moduls (2) in Bezug auf die Anschlussvorrichtung (30G) entspricht, **dadurch gekennzeichnet, dass** die Anschlussvorrichtung zur Herstellung der lufttechnischen Verbindung zwischen das erste und das zweite Modul eingeführt werden kann; die Schräge (50) erstreckt sich in Einführungsrichtung der Anschlussvorrichtung (30G) zwischen dem ersten und zweiten Modul (1 und 2).

2. System nach dem vorhergehenden Anspruch, **dadurch gekennzeichnet, dass** das System eine Dichtung (60) vorbestimmter Dicke umfasst, die zwischen der Führungsschräge des zweiten Moduls (2) und der (50) der Anschlussvorrichtung (30G) aufgebracht ist, um die Dichtheit und die Korrektur von Fehlausrichtungen zwischen dem ersten und zweiten Modul (1 und 2) in einer Richtung orthogonal zur Einführungsrichtung der Anschlussvorrichtung (30G) sicherzustellen.

3. System nach dem vorhergehenden Anspruch, **dadurch gekennzeichnet, dass** das freie Ende des Kanals (21) des zweiten Moduls (2) so ausgebildet ist, dass es die Führungsschräge des zweiten Moduls (2) bildet.

4. System nach dem vorhergehenden Anspruch, **dadurch gekennzeichnet, dass** das freie Ende des Kanals (21) des zweiten Moduls (2) einen Bund (25) aufweist, der die Öffnung (221) des Kanals (21) umschließt, und dass die Dichtung (60) auf dem Bund (25) aufgebracht ist.

5. System nach einem der vorhergehenden Ansprüche, **dadurch gekennzeichnet, dass** die Anschlussvorrichtung (30G) ferner Führungsmittel (54, 55) umfasst, die mit komplementären Führungs- und Haltemitteln des ersten Moduls (1) an der Schnittstelle zwischen dem ersten Modul (1) und der Anschlussvorrichtung (30G) zusammenwirken können, um die Anschlussvorrichtung (30G) aus einer ersten Einführungsposition (A) zwischen dem ersten Modul (1) und dem freien Ende des Kanals (21) des zweiten Moduls (2) in eine zweite Verriegelungsposition (B) der Anschlussvorrichtung (30G) an dem ersten Modul (1) zwischen dem Kanal (11) des ersten Moduls (1) und dem freien Ende des Kanals (21) des zweiten Moduls (2) zu bringen.

6. System nach dem vorhergehenden Anspruch, **dadurch gekennzeichnet, dass** das System eine Verriegelungsvorrichtung (16) durch Aufklipsen erster Verriegelungsmittel auf zweite Verriegelungsmittel umfasst, die einander zugewandt sind und jeweils an der Anschlussvorrichtung (30G) und an dem ersten Modul (1) angeordnet sind, oder umgekehrt, wenn sich die Anschlussvorrichtung (30G) in der zweiten Position (B) befindet.

7. Anschlussvorrichtung (3), die dazu bestimmt ist, in das System gemäß den vorhergehenden Ansprüchen eingefügt zu werden, **dadurch gekennzeichnet, dass** die Vorrichtung einen Einschub (30G) bildet, der mindestens erste Teile umfasst, die mit zweiten Teilen des ersten Moduls (1) ineinandergreifen können, um einen Verbindungskanal (31) zu bilden, der eine lufttechnische Verbindung zwischen dem Kanal (11) des ersten Moduls (1) und dem Kanal (21) des zweiten Moduls (2) sicherstellen kann, und erste Führungsmittel umfasst, die Gleitbahnen oder Schienen (54, 55) bilden, die im oberen Teil des Einschubs (30G) angeordnet sind und mit den Führungs- und Haltemitteln zusammenwirken können, welche zu denen des Einschubs (30G) komplementär sind, und einen Boden (50) umfasst, der eine Führungsschräge aufweist, welche ein zweites Führungsmittel bildet.

8. Lufttechnisches Verbindungsverfahren zum gegenseitigen Verbinden (1) und (2) von zwei Modulen (1, 2) eines Kraftfahrzeugs, die einander gegenüberliegend vorpositioniert sind und jeweils mindestens einen Luftkanal umfassen, und einer Anschlussvorrichtung (30G ; 30D) nach dem vorhergehenden Anspruch, **dadurch gekennzeichnet, dass** das Verfahren daraus besteht:
- die Führungsmittel (54, 55) der Anschlussvorrichtung (30G) mittig auf die komplementären Führungs- und Haltemittel des ersten Moduls (1) auszurichten und dann einzuführen, um die Anschlussvorrichtung (30G) an dem ersten Modul (1) einzuhängen und die Anschlussvorrichtung (30G) zugleich an dem zweiten Modul (2) in Eingriff zu bringen, um die Führungsschräge (50) der Anschlussvorrichtung (30G) auf die Kanalführungsschräge (21) des zweiten Moduls (2) auszurichten;
- die Anschlussvorrichtung (30G), nachdem sie zwischen dem ersten und zweiten Modul (1 und 2) in Eingriff gebracht wurde, komplett bis zu einem Anschlag (15) des ersten Moduls (1) zu schieben; der Druck drückt dabei die Dichtung (60), die auf der Kanalführungsschräge (21) des zweiten Moduls (2) angeordnet ist, zusammen, um sowohl die Dichtheit der Verbindung als auch die Korrektur von Fehlausrichtungen zwischen dem ersten und zweiten Modul (1 und 2) sicherzustellen; und
- die Anschlussvorrichtung (30G) in dem ersten Modul (1) zu verriegeln, sobald die Anschlussvorrichtung (30G) den Anschlag (15) erreicht hat; der Verbindungskanal (31) der Anschlussvorrichtung (30G) ist ausgebildet, wenn sich die Anschlussvorrichtung (30G) am Anschlag befindet.

9. Fahrzeug (V) mit mindestens einer Anschlussvorrichtung (3) nach Anspruch 7, wobei es sich bei dem ersten Modul (1) um eine im Armaturenbrett (PBD) des Fahrzeugs (V) untergebrachte Klimaanlage (10) handelt und bei dem zweiten Modul (2) um einen auf dem Boden (P) des Fahrzeugs (V) vormontierten Luftverteilungskreis (20) handelt.

## Claims

1. Aeraulic connection system for joining together first and second modules (1, 2) of a motor vehicle (V), which are prepositioned facing one another and each comprising at least one air duct (11, 21) intended to be in aeraulic communication and at least one connecting device (30G) configured to be interposed between the two ducts (11, 21), said second module (2) comprising a guide ramp with a gradient determined with respect to the first module (1), and said connecting device (30G) comprising a guide ramp (50) of which the gradient corresponds to that of the second module (2) facing said connecting device (30G), **characterised in that** the connecting device is able to be inserted between the first and the second module in order to provide the aeraulic connection; said ramp (50) extending in the direction of insertion of the connecting device (30G) between the first and second modules (1 and 2).

2. System according to the preceding claim, **characterised in that** it comprises a seal (60) of a determined thickness, arranged between the guide ramp of the second module (2) and that (50) of the connecting device (30G) in order to provide the sealing and the catering of the misalignment between the first and second modules (1 and 2) in a direction orthogonal to the direction of insertion of the connecting device (30G).

3. System according to the preceding claim, **characterised in that** the free end of the duct (21) of the second module (2) is shaped to define the guide ramp of the second module (2).

4. System according to the preceding claim, **characterised in that** the free end of the duct (21) of the second module (2) comprises a collar (25) surrounding the mouth (221) of the duct (21) and **in that** the seal (60) is arranged on said collar (25).

5. System according to one of the preceding claims, **characterised in that** the connecting device (30G) further comprises means of guiding (54, 55) able to cooperate with complementary means of guiding and maintaining of the first module (1), at the interface between the first module (1) and the connecting device (30G), in order to bring the connecting device (30G) from a first position of insertion (A), between the first module (1) and the free end of the duct (21) of the second module (2), to a second position (B) of locking of the connecting device (30G) on the first module (1) between the duct (11) of the first module (1) and the free end of the duct (21) of the second module (2).

6. System according to the preceding claim, **characterised in that** it comprises a device for locking (16) via clipping of the first means for locking on second means for locking, facing each other, and respectively arranged on the connecting device (30G) and on the first module (1), or inversely, when the connecting device (30G) is in the second position (B).

7. Connecting device (3) intended to be implemented in the system according to the preceding claims, **characterised in that** it defines a drawer (30G) comprising at least first portions able to fit together with second portions of the first module (1) in order to construct a connecting duct (31) able to provide an aeraulic connection between the duct (11) of the first module (1) and the duct (21) of the second module (2), and first means for guiding forming sliders or rails (54, 55), arranged in the upper portion of the drawer (30G), able to cooperate with the means for guiding and maintaining, complementary to those of the drawer (30G) and a bottom (50) comprising a guide ramp that defines a second means for guiding.

8. Method of an aeraulic connection for joining one (1) to the other (2), two modules (1, 2) of a motor vehicle, which are prepositioned facing one another and each comprising at least one air duct, and a connecting device (30G; 30D) according to the preceding claim, **characterised in that** it consists in:
- centring then introducing the means for guiding (54, 55) of the connecting device (30G) onto the complementary means for guiding and maintaining of the first module (1) in such a way as to hook the connecting device (30G) onto the first module (1) while still engaging the connecting device (30G) onto the second module (2) in order to have the guide ramp (50) of the connecting device (30G) coincide with the guide ramp of the duct (21) of the second module(2);
- pushing the connecting device (30G) once engaged between the first and second modules (1 and 2) until it abuts against an abutment (15) of the first module (1); with the pushing crushing the seal (60) arranged on the guide ramp of the duct (21) of the second module (2) providing both the sealing of the connection and the catering of the misalignment of the first and second modules (1 and 2); and
- locking the connecting device (30G) in the first module (1) once the connecting device (30G) has reached the abutment (15); with the connecting duct (31) of the connecting device (30G) being constructed when the connecting device (30G) is in abutment.

9. Vehicle (V) comprising at least one connecting device (3) according to claim 7, wherein the first module (1) is an air conditioning unit (10) supported by the dashboard (PBD) of the vehicle (V) and the second module (2) is an air distribution circuit (20) preassembled on the floor (P) of the vehicle (V).
